(19) **Europäisches Patentamt**

**European Patent Office**

**Office européen des brevets**

(11) Publication number : **0 335 489 B1**

(12) # EUROPEAN PATENT SPECIFICATION

(45) Date of publication of patent specification :
30.11.94 Bulletin 94/48

(51) Int. Cl.⁵ : **G06F 7/24**

(21) Application number : **89301417.5**

(22) Date of filing : **15.02.89**

(54) **Concurrent sorting apparatus and method.**

(30) Priority : **30.03.88 US 175077**

(43) Date of publication of application :
**04.10.89 Bulletin 89/40**

(45) Publication of the grant of the patent :
**30.11.94 Bulletin 94/48**

(84) Designated Contracting States :
**DE FR GB**

(56) References cited :
**US-A- 3 713 107
US-A- 4 031 520
US-A- 4 567 572
US-A- 4 595 995**

(73) Proprietor : **International Business Machines
Corporation
Old Orchard Road
Armonk, N.Y. 10504 (US)**

(72) Inventor : **Ivsin, Michael
111 Rhinecliff Road
Rhinebeck New York 12572 (US)**

(74) Representative : **Burt, Roger James, Dr.
IBM United Kingdom Limited
Intellectual Property Department
Hursley Park
Winchester Hampshire SO21 2JN (GB)**

## Description

This invention relates to concurrent sorting apparatus and methods handling serial data inputs.

Data sorting is a process where starting with "N" random elements, an order is created such that $E_1 < E_2 < E_3 < ... E_N$ known as ascending order, or, also $E_N > E_{N-1} > E_{N-2} > ... E_1$ known as descending order. The elements can be ordered numerically or logically.

It is desired that the data sorting process be as fast as possible and, to that end, a number of algorithms have been implemented. Some machines process each element one at a time and a significant speed increase can be achieved if many elements can be manipulated concurrently. In general, all "N" elements are not available simultaneously and it is, therefore, desirable to start processing the elements as soon as these become available.

It is desirable that the sorting apparatus or engine has pipelining, concurrency, use the host's memory, and has a comparator count that does not limit the sorting capacity. Pipelining is the ability to accept and supply data continuously - one unit of data per fastest machine cycle. Concurrency (sometimes also referred to as parallelism or chaining) is the processing of two or more arithmetic/logical operations at a time. Usually, in order to achieve concurrency, a plurality of dedicated memory modules is used. This, in turn, is costly in terms of product cost, package bulk, and power consumption and, above all, limits the sort capacity to that of the dedicated memory. It is therefore highly desirable that the sorting apparatus use the host's memory. Many sorting apparatus or engines call for a plurality of comparators. Such count is sometimes tied to a particular quantity such as "C" where a multiple of "C" becomes the maximum number of the elements that can be sorted. It is desirable to provide an apparatus where there is no limit on the sort capacity even with a few comparators. In the prior art such as in U.S. Patent No. 4,520,456 of Miranker et al entitled "Dual Reciprocating Pipelined Sorter", U.S. Patent No., 4,131,947 of Armstrong et al entitled "Random Access Digital Sorter", and the U.S. Patent No. 4,595,995 of Alles entitled "Sort Circuit and Method Using Multiple Parallel Sorts of the Sorted Items," all of these sorting apparatus require a dedicated memory and have a number of comparators where such count determines the maximum number of the elements that can be sorted. U.S. Patent No. 4,559,612 of Vrielink entitled "Sorting Device for Data Words" is pipelined input, not pipelined as to output, has dedicated memory and is very memory intensive. In the U.S. Patent No. 4,567,572 of Morris et al entitled "Fast Parallel Sorting Processor", the comparator count does not limit the sorting capacity, but this patent has dedicated memory, the pipelining has delay and is software controlled and believed relatively slow. U.S. Patent No. 4,210,961 describes a software process for sorting. European Patent Application No. 0149,213 of Hitachi, Ltd. filed December 21, 1984 entitled "Vector Processor" is pipelined, uses Host's memory, has no limit on sorting capacity, but is not concurrent. It has a constant convergence toward sort completion, regardless of the data content, that is in proportion to $N*Log(N)$.

US-A-4 031 530 describes a method and apparatus for sorting a stream of data elements according to their numerical significance. The apparatus includes a first set and a second set of stacks for storing the data elements. The data elements are initially formed into groups and each group is stored in a respective one of the first set of stacks with the elements being sorted into the order of their numerical significance. Next, the lowest order elements from all the stacks, which must include the lowest order element in the data stream, are read out and stored in a first one of the second set of stacks in numerical order. Then, repeatedly, the next lowest order elements from each of the first set of stacks are read out and stored in numerical order in further stacks from the second set of stacks.

The lowest order element is then read out from the first one of the second set of stacks. The element next in numerical order in the stack of elements in the first set of stacks from which the just read out element originated is then supplied to the stack from which the lowest order element has been read out and sorted into its correct numerical order. Again the lowest order element is read out and the process is repeated until all the data elements forming the data stream have been read out in their correct numerical order.

The object of the present invention is to provide an improved method and apparatus for sorting a string of data elements into their order of numerical significance. This is achieved by a method and apparatus defined in claims 1 and 6, respectively.

The invention relates to a method for sorting a string of data elements, which have or can be taken to have numerical significance, into the order of their numerical significance, the method comprising defining an array of stacks in an order of stacks, each stack being of the FIFO type and including a plurality of storage positions, performing a storing operation of storing the data elements in the stacks with the data elements in each stack being sorted into a sequence in the order of their numerical significance, and performing a reading out operation of reading out the data elements from the stacks to form an output stream in which the data elements are sorted into the order of their numerical significance.

According to the invention the method is characterised in that the storing operation comprises the steps of supplying each data element in turn to the array of stacks, comparing each supplied data element with the data element stored at one end of the sequence of data elements in each stack in order to determine which such stored data element has a first particular relationship in the order of numerical significance to the supplied data element, moving the determined stored data element into the adjacent storage position in its associated stack, and storing the supplied data element in the storage position originally occupied by the moved data element.

The method is also characterised in that the reading out operation comprises several steps.

The first step consists of performing a first comparison operation comprising comparing a first data element stored at the other end, opposite the one end, of the first stack in the order with a second data element stored at the other data end of the adjacent stack in the order to determine if the first stored data element has a second particular relationship in the order of numerical significance to the second stored data element, reading out the first stored data element if the second particular relationship is determined, and reading out the second stored data element if the second particular relationship is not determined.

The second step consists of performing a second comparison operation comprising comparing the stored data element read out from the first comparison operation with a third data element stored at the other end of the next adjacent stack in the order to determine if the read out stored data element has a third particular relationship in the order of numerical significance to the third stored data element, reading out the first read out stored data element if the third particular relationship is determined, and reading out the third stored data element if the third particular relationship is not determined.

The third and fourth steps consist of repeating the second comparison operation with the remaining stacks in order, and reading out the final read out stored data element into the output data stream.

In accordance with a preferred embodiment of the invention the particular relationships are defined as follows:

In the storing operation the first particular relationship is that said stored data element is higher in numerical order than the supplied data element.

In the reading out operation, in first comparison operation, the second particular relationship is that the second stored data element is higher in numerical order than the first stored data element, and in the second comparison operation, the third particular relationship is that the third stored data element is higher in numerical order than the read out data element.

The invention also related to apparatus for performing the above method.

This invention equally provides both special purpose and adapted general purpose data processing apparatus for performing such a method.

In such, for random input (source) data, sorting converges toward completion in proportion to N*Log(N)/Log(S) where 'S' is the number of stages and having a minimum of two stages. Also, when source data is sorted and contains some random elements as is the case when updating an existing sorted file, the concurrent sorting engine converges toward completion in proportion to N. All logarithms are base 2.

In accordance with one embodiment of the present invention, a concurrent sorting apparatus for sorting in respectively ascending or descending order a random stream of data elements comprises a plurality of comparator stages, each stage including a first comparator and a storage means. The first comparator of the first stage is responsive to the incoming random data elements for comparing the incoming data element with the last stored data element of that stage and for if the incoming data is respectively greater than or less than the last stored data element value, storing that number in the storage means and if the incoming data element value is respectively less than or greater than the last stored data value passing that data element to be compared with the stored data element in the next succeeding stage. The apparatus further includes means for comparing the stored data elements from the storage means of the comparator stages and for if the stored data elements is respectively less than or greater than the stored number in the compared storage means passing the lesser or higher data element to be compared with the stored data element in the next succeeding stage.

The present invention will be described further by way of example with reference to embodiments thereof as illustrated in the accompanying drawings in which'

Figure 1 is a block diagram of one embodiment of the present invention;

Figure 2 is a block diagram of the system according to a second embodiment of the present invention using host storage;

Figure 3 is a detailed diagram of two stages of the system of Figure 2;

Figure 4 illustrates the RAS management for initial conditions for the two stage system of Figure 3; and

Figure 5 illustrates the initial pointers in RAS for S stage sorting apparatus.

In general terms, the method pursued by either embodiment comprises sorting a string of data elements which have or can be taken to have numerical significance, into numerical order in data processing apparatus by defining a plurality of stacks in stack order, inputting the data elements in random order, one at a time, and comparing each input element with the tails of the stacks in stack order and adding the element to the first stack encountered to which it can be added preserving the numerical order within the stack, simultaneously comparing the heads of the stacks to advance towards the output any stack head data element that precedes in numerical order the stack head that follows in stack order, and recycling the output once the input is complete.

A capacity is defined for each stack and a FIFO buffer is defined between the stack output and input, and, when the addition of a new data element to the tail of a full stack causes an output overflow from that stack, pushing and or replacing the stack heads of all stacks that are lower in stack order and include data elements, progressively and adding the ultimately displaced head into either the first encountered empty stack or into the FIFO buffer. When there are data elements in all the stacks and the newly input data element cannot be added to the tail of any of the stacks, generating an overflow, the tails of each stack are reset to an initial default value which precedes or is equal to any potential value in the numerical order and the new data element is added to the first stack in the stack order.

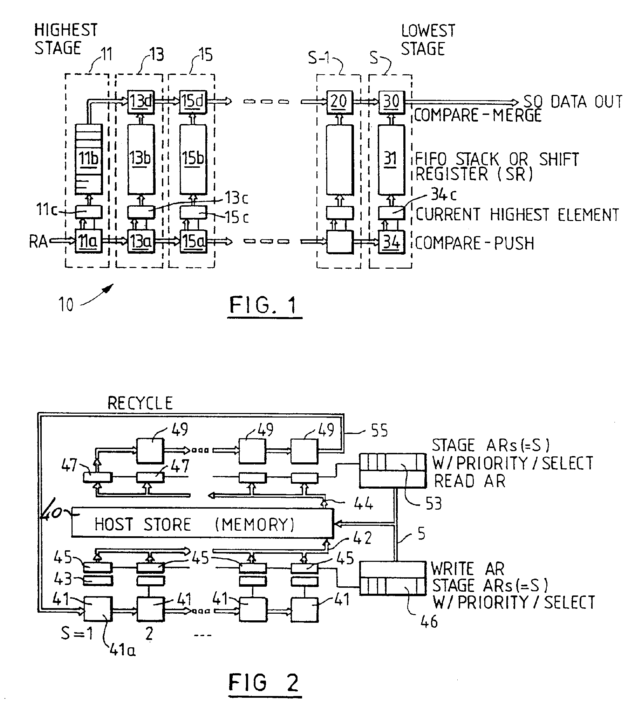

Referring to the system 10 of Figure 1, which is disclosed in an ultra-simplistic manner, there are S stages with the stage 11 nearest the input of the random elements being the first stage. Each stage comprises a comparator, a last element storage for storing and presenting to the comparator the last element stored in the stage, and a FIFO (first in, first out) stack or shift register. Each stage will produce one sorted string with the last input to the FIFO stack being at the bottom and the oldest lowest valued input closest to the output at the top. All of the S stages except the first stage include a comparator for comparing and merging the output from the FIFO stacks or registers for presenting and comparing the lowest valued element of the string at each stage with the corresponding lowest valued element from the previous higher level stage. The comparator passes to the lower level stages those elements which are of a lower number. In the process of data sorting, binary signals are used to represent elements to be sorted and the comparing and passing activities are synchronised such that all stages undergo operations concurrently. If an output buffering function is not available in the source storage, a further FIFO buffer at the output of the last stage is required and the practical limit to the source string is the total capacity of the system.

These binary numbers representing elements are applied to the system Figure 1 at the input marked RA representing random numbers to be sorted. The random numbers are applied to the first comparator IIa of the first stage represented by 11. At the comparator IIa, the incoming binary number or symbol is compared to the value last previously stored element referred to as the current highest element in the FIFO stack 11b of stage 11 located at current class element storage 11c. If the incoming random access element binary value is higher than or equal to the previous highest current element in the stack at 11c, the current element in the current element storage 11c is replaced and pushed up the FIFO stack and the incoming element becomes the current new highest element at storage IIc in stage 11. Therefore, all of the elements in the FIFO stack or shift register are in ascending order from output back to input. The number of FIFO stack store locations or shift registers can be any set number such as, for example, six, and this would be represented by six storage locations or FIFO stacks or shift registers. Each time the input element is higher than or equal to the previous element at the input of comparator 10a, the element is pushed up higher toward the last or output of the stack or register.

If the incoming element at the RA input to comparator 11 is less than the current highest element at storage IIc that element is passed on to the next lower stage 13. If that element presented at comparator 13a is still less than the highest element in the current element storage 13c, the input element is passed on to the next lower stage 15. If the element presented at comparator 15a is still less than the highest element in the current element stage 15c, the input is passed on. The element continues to move from stage to stage toward the Sth stage. The elements pushed up the stack 13b appear eventually at the output in a first in first output basis and is compared with the element pushed up on a first in first out basis from stack IIb at compare-merge comparator 13d. Similarly, the comparator 15d compares the output from comparator 13d which represents the lowest element from stacks 13b and 11b and the output from stack 15b. This comparison and merge continues concurrently through stages 11, 13, 15 through S at comparators 13d, 15d through 20 and 30 respectively. If the element from the left stage is lower than the element from the neighbour (right) stage, then that element is merged and passed on to the next lower stage until finally the lowest value is passed out of the lowest stage at comparator 30 after comparing the output from the FIFO stack or register 31 of stage S with the output from comparator 20 of stage S-1.

An overflow condition occurs when there is an element present in the compare-push stream to the comparator 34 of the lowest stage S and this element was not extracted by any stage and is lower than the current highest at storage 34c and is "out of order." When this occurs all of the elements and all the current highest elements are pushed up the stack and all the current highest are set to zero to allow the input elements to become the current highest elements at storage 34c through 11c, and a flag is set to indicate incomplete condition. When all elements are passed through the engine and incomplete flag is set, then all elements are fed back into the highest stage at comparator 11a for another sorting pass through.

In accordance with this embodiment, the elements are sorted in ascending order with the lowest valued element at the output and the highest valued element at the input. The output could also be read out in reverse order. Also, the operation of the stages could be reversed to provide the highest valued element at the output and in descending order such that if the incoming element was less than the last stored element in the stage, such as at comparator 11a, that element would become the last stored element in the stage (at 11c) and if the element was of a higher value it would be passed to the next stage 13 and the greater valued element at comparator 13d, etc. would be passed toward the output from comparator 30.

Initially, all stages are empty. Thus, a stage will accept at least one element that will become the current highest element. The second or subsequent element that a stage can accept will be greater than or equal the current highest element. For random data, therefore, every time a stage accepts an element the opportunity to accept another element is, on the average, halved.

If 'e' is the average number of elements accepted by a stage then $0 < e = Log(N)$ for $N \gg 1$ where N is the number of random elements offered to a stage.

Starting with random data, first pass: - each stage extracts 'e' elements and sorting engine produces strings with an average sorted string length of 'eS' elements.

On second (subsequent) pass ('P') the input elements are no longer random, each stage extracts at least eS elements, and sorting engine sorts at least eS**2 (eS**P) elements per string.

The number of partially sorted strings, or Runs 'R', after first pass is: $R = N / eS$.

After second pass: $R = \dfrac{N/eS}{S} = N / eS**2$.

Sorting process is complete if there is just one sorted string (i.e., no overflow)

$$1 = R = N / eS * * P.$$

Solving for P

$$P = \frac{Log(N) - Log(e).}{Log(s)}$$

As 'P' represents the number of passes through the sorting engine and as each pass manipulates N elements in N cycles (or operations) then the number of cycles (or operations) 'C' is:

$$C = NP = N(Log N - Log e) / Log S$$

and

$$C = N (Log N - Log (Log N)) / Log S.$$

The use of a dedicated storage for a given sorting apparatus facilitates independent sorting activity after the sorting apparatus is loaded with data. However, dedicated storage capability, namely sorting capacity, can be limited by physical constraints such as packaging or by component cost.

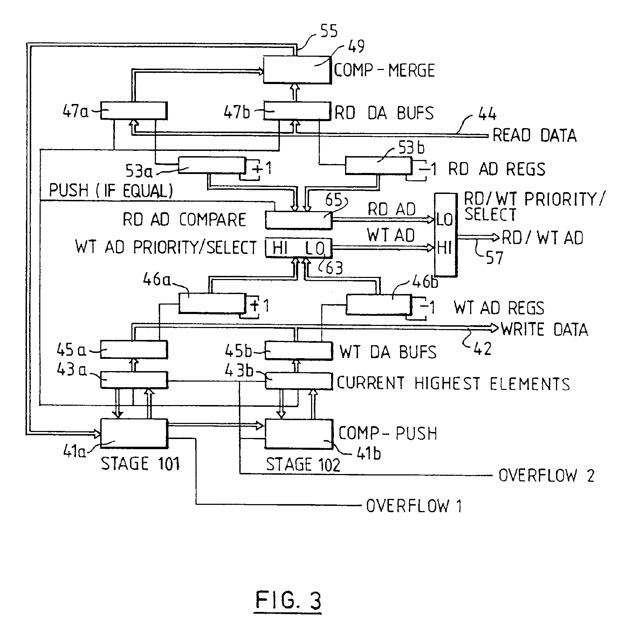

Should it be possible for the sorting apparatus to access the RAS (Random Access Storage or RAM) then the additional interfacing circuitry would also access an existing computer resource or resources. The sorting operation would no longer be independent yet can benefit in several ways. The sorting apparatus capacity, namely the maximum number of elements that can be sorted, increases in proportion with the RAS size. The sorting can take advantage of system features such as virtual storage and cache. The sorting apparatus need not be loaded, under program control, with data prior to the commencement of the sorting operations. The addresses within the sorting apparatus are initialised to the value that access, directly, the block of data to be sorted. Referring to Figure 2, there is illustrated a sorting apparatus according to one preferred embodiment of the present invention. Pursuant to Figure 2, in the middle there is the RAS (Random Access Storage) or host storage 40 that has a storage capacity equal to 2N where N is the maximum number of elements that can be sorted. Each of the S stages includes comparators 41 and 49, a current or a last highest element storage 43, write data buffer 45, and read data buffer 47. The incoming random elements come from RAS into read data buffers 47, compared at comparators 49 and the lowest is passed via 55. At the first comparator 41a the element is compared to the current highest element in storage 43 and if the input element exceeds that in the current highest storage 43, the new data becomes the current highest element and pushes the previous current highest element to the write data buffer 45 for being written into the host storage 40 via bus 42. As per the previous operation, if the incoming element is less than the current highest element of the stage, it progresses into the next stage comparator, etc., as in the previous operation. The write address registers 46 will send a separate and different address for each stage and each element put on the bus 42 for storing the write data from write data buffer 45 at the host storage 40. The read address registers 53 generate the appropriate addresses for the stages 1 through S to retrieve the elements and sequentially put the stored elements on the corresponding comparator storage 47 for each of the respective stages 1 through S via bus 44. The element values at the comparator storage locations 47 are then compared at output comparators 49 in the same manner as done previously such that if the output from either stage is for the example of lower value than the previous stage, it is pushed forward to the output at 55. As one element appears at 55 one of the read data buffers 47 becomes empty and this one will be refilled via 44 using an address from 53 that is separate and different for each stage. In this manner the system operates as in the previous case but is using the host storage. A more detailed embodiment of the two-stage system is described below in connection with Figure 3.

In the two-stage operation of Figure 3 there is for the first stage the comparator of 41a and comparator 41b for the second stage. The current highest element for the first stage is stored at storage 43a and for the second stage at storage 43b. The output of storage 43a is applied to a write data buffer 45a and the output of storage 43b is applied to the write data buffer 45b. Associated with stage 101 is a first write address register 46a and associated with stage 102 is a second write address register 46b. In the case where there are two simultaneous elements that are pushed filling both write data buffers 45a and 45b, generating two write requests, the element in Stage 101 will have the highest priority and will be written into the Random Access Storage. Should the subsequent element be accepted into Stage 101 then the same, highest priority, write will be executed. Therefore, the write data buffers will not overflow and pipelining is preserved. Eventually all write data buffers will be empty. The read data buffers will be filled via read requests.

Single-ported storage accepts only one address at a time. In this case the selector 63 (multiplexer) forwards one address to host storage with write address having higher priority.

Double-ported storage can service two address ports simultaneously. In this case, the selector 63 is not required. Read and write requests will occur simultaneously and an additional sorting speed-up is accomplished.

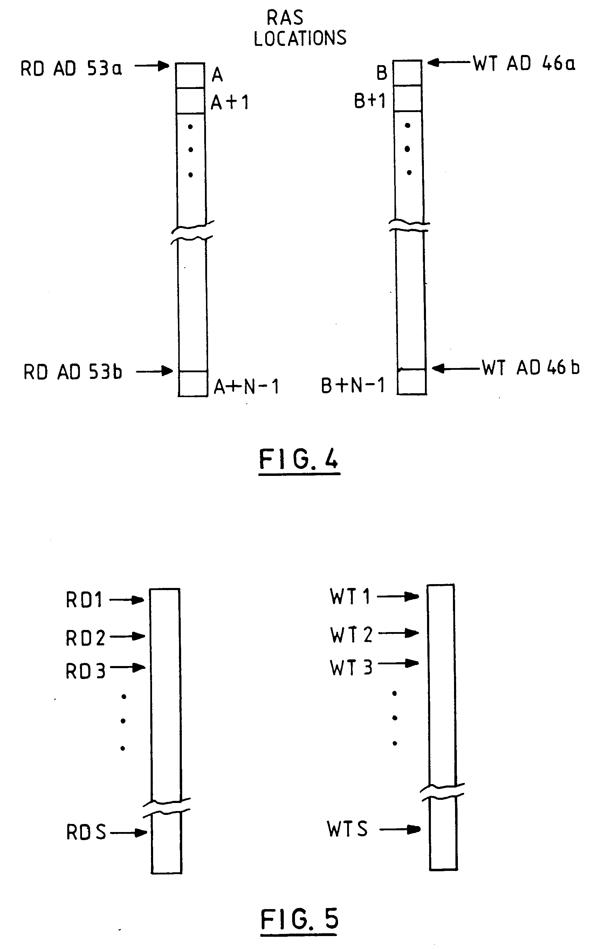

The Random Access Storage management will be described in connection with Figure 4. Four addresses will be loaded to the address register represented in Figure 4. The total Random Access Storage (RAS) allocation will be 2N (N is the number of elements to be stored). The elements in RAS are initially stored in consecutive locations. The read address register 53a will point to the first element at location A and read address register 53b will point to element N at location A + N - 1. The write address register 46a will point to a working storage location B' and the write address register 46b to location B + N - 1. The write address register 46a can be incremented by one and the write address register 46b can be decremented by one. The prioritising is done at priority select 63 such as the selecting for priority stage 101 over stage 102. The write data is sent over bus 42 with the write address via the output address lead 57. The read data enters along bus 44 to the read data buffers 47a and 47b corresponding to stages 101 and 102 respectively. The read addresses are generated by the read address registers 53a and 53b with read address generator 53a starting at address A for example and read address 53b starts at address A + N - 1. The read address register 53a is incremented by one address location after each read request and the read address register 53b is decremented by one address location after each read request starting at the A + N - 1 address. These read addresses are compared at comparator 65 and, if equal, all elements are read from storage. Incoming data at the read address buffers 47a and 47b are compared at comparator 49 and the lower of the two comparisons is gated out to output 55 and back to the inputs of the first stage 41a.

A review of the sorting process is as follows. Initially, all of the data buffers will be empty and the read requests will be pending. Read data buffers 53a and 53b will be filled and the sorting apparatus will initiate the sorting process. As the elements are accessed from both ends (RAS location A through A+ N -1), the read address register 53a will increment following a data fetch command while read address register 53b would decrement. When the contents of both read address registers 53a and 53b are equal then a sorting pass is complete, data is sequentially pushed from the read data buffers, current highest element buffers 43a and 43b, and write data buffers 45a and 45b. At this point the content of the write address registers will also be equal but no verification/check need be performed. More than one sorting pass may be required. If there is an overflow from stage 102 another sorting pass will be required. If there is an overflow from stage 101 only, then only one additional sorting pass is required.

To initiate a second sorting pass, the read address register 53a and 53b will be initialised for locations B and B+N -1, respectively. The write address registers 46a and 46b will be initialised for locations A and A+N -1, respectively. Overflow 101 will be reset. Following the second sorting pass, the address registers will be initialised as for the first sorting pass. The address swapping will continue until there is no overflow from stage 101. At this point the sorting process is completed. Note that, in general, the sorted elements can occupy either locations A through A+ N-1 or B through B+ N-1.

If there is an overflow from stage 102, an overflow 2 flag is set and the current highest elements will be loaded into the write data buffers and the elements in compare-push circuits reference 41a and 41b will be loaded in (and become) the current highest elements.

Figure 5 illustrates the Random Access Storage management for an S-stage sorting apparatus. The read and write address registers are initialised as shown in Figure 5. The block of RAS that each read and write address register will span is calculated as N divide by S, truncated. The last block will be increased to accommodate all N elements to be sorted. For example, let N equal 103 and S equal 9. Each stage will access 103 divide by 9 is equal to 11 elements while the last stage will access 15 (8 x 11 + 15 = 103).

No read or write address pointer can advance past the initial value of the next pointer. For example, read pointer 1 cannot advance part the initial value of read pointer 2, or write pointer 2 cannot advance part the initial value of write pointer 3. Two S comparators (S for read control and S for write control) will be required. Once the limit for a write stage is reached, the writing to RAS will cease for this particular stage during the sorting pass. A stage thus inhibited will pass all elements through to the next stage. Note that a provision must be made to also store the current highest element. Thus, a stage will be considered full when, say, write address N is equal to the initial write address N + 1 less one.

Ordinarily, compare-merge process pauses when an element is not present as it is not known which element should be merged. When all elements are read from a particular block, an indication will be given allowing the compare-merge circuit to continue merging elements from other RAS blocks, namely stages, until all elements are read.

In case of an overflow in the last stage, then another sorting pass will be required. The second or subsequent sorting passes require a swap of read and write address pointers in the same way as described for the two-stage sorting engine described previously.

## Claims

1. A method for sorting a string of data elements, which have or can be taken to have numerical significance, into the order of their numerical significance, the method comprising

defining in an array of stacks (11, 13, 15, ... S; 40) an order of stacks, each stack being of the First In First Out type and including a plurality of storage positions (11b, 13b, 15b, ... 31; 43, 40, 47),

performing a storing operation wherein said data elements are stored in said stacks with the data elements in each stack being sorted into a sequence in the order of their numerical significance, and

concurrently performing a reading out operation wherein said data elements are read out from said stacks to form an output stream in which said data elements are sorted into the order of their numerical significance,

characterised in that

said storing operation comprises the steps of

supplying each data element in turn to said array of stacks,

comparing each supplied data element with the element stored at one end of the sequence of data elements in each stack in order to determine which such stored data element has a first particular relationship in the order of numerical significance to the supplied data element,

moving said determined stored data element into the adjacent storage position in its associated stack, and

storing said supplied data element in the storage position originally occupied by said moved data element,

and in that said reading out operation comprises the steps of

performing a first comparison operation comprising

comparing a first data element stored at the other end, opposite said one end, of the first stack in said order of stacks with a second data element stored at said other end of the adjacent stack in said order of stacks to determine if said first stored data element has a second particular relationship in the order of numerical significance to said second stored data element,

reading out said first stored data element if said second particular relationship is determined, and

reading out said second stored data element if said second particular relationship is not determined,

performing a second comparison operation comprising

comparing the stored data element read out from said first comparison operation with a third data element stored at said other end of the next adjacent stack in said order of stacks to determine if said read out stored data element has a third particular relationship in the order of numerical significance to said third stored data element,

reading out said first read out stored data element if said third particular relationship is determined, and

reading out said third stored data element if said third particular relationship is not determined,

repeating said second comparison operation with the remaining stacks in said order of stacks, and

reading out the final read out stored data element into said output data stream.

2. A method as claimed in Claim 1 characterised in that

in said storing operation said first particular relationship is that said stored data element is higher in numerical order than said supplied data element, and

in said reading out operation,

in first comparison operation, said second particular relationship is that said second stored data element is higher in numerical order than said first stored data element, and

in said second comparison operation, said third particular relationship is that said third stored data element is higher in numerical order than said read out data element.

3. A method as claimed in Claim 1 or Claim 2 comprising performing an overflow operation when the step in said storing operation of comparing a supplied data element with a data element stored in each stack does not determine a stored data element having the first particular relationship with the supplied data element,

characterised in that said overflow operation comprises

transferring all the data elements stored in said stacks to the string of data elements,

storing said supplied data element at said one end of the first stack in said order of stacks, and

subsequently performing said storing operation and said reading out operation.

4. A method as claimed in any one of the preceding claims characterised in that said storing operation comprises performing the preliminary step of comparing each supplied data element with the data element stored at the other end of each stack in succession to determine if any one of said stored data elements has fourth particular numerical relationship with said supplied data element,

supplying said stored data element having said fourth particular relationship, if it is determined, to said array of stacks for performance of the remaining steps of said storing operation, and

supplying said supplied data element to said array of stacks for the remaining steps of said storing operation, if a stored data element having said fourth particular relationship is not determined.

5. A method as claimed in Claim 4 characterised in that, in said preliminary step, said fourth particular relationship is that said stored data element is lower in numerical order than said supplied data element.

6. Apparatus (10) for sorting a string of data elements, which have or can be taken to have numerical significance, into the order of their numerical significance, the apparatus comprising

an array of stacks (11, 13, 15, ... S; 40) in an order of stacks, each stack being of the First In First Out type and including a plurality of storage positions (11b, 13b, 15b, ... 31; 43, 40, 47),

storing means (11a, 13a, 15a, ... 34; 41) for performing a storing operation wherein said data elements are stored in said stacks with the data elements in each stack being sorted into a sequence in the order of their numerical significance, and

concurrently readout means (11d, 13d, 15d, ...20,30; 47) for performing a reading out operation wherein said date elements are read out from said stacks to form an output stream in which said data elements are sorted into the order of their numerical significance,

characterised in that

said storing means comprises

means (RA) for supplying each data element in turn to said array of stacks,

comparison means (11a, 13a, 15a, ...34; 41) for comparing each supplied data element with the data element stored at one end of the sequence of data elements in each stack in said order of stacks to determine which such stored data element has a first particular relationship in the order of numerical significance to the supplied data element,

means (11b, 13b, 15b, ...31; 41) for moving said determined stored data element into the adjacent storage position in its associated stack, and

means (11b, 13b, 15b, ...31; 46) for storing said supplied data element in the storage position originally occupied by said moved data element,

and in that said readout means comprises

first comparison means (13d; 49) for performing a first comparison operation comprising

comparing a first data element stored at the other end, opposite said one end, of the first stack in said order of stacks with a second data element stored at said other end of the adjacent stack in the order to determine if said first stored data element has a second particular relationship in the order of numerical significance to said second stored data element,

readout means for reading out said first stored data element if said second particular relationship is determined, and

readout means for reading out said second stored data element if said second particular relationship is not determined,

second comparison means (15d, ... 30; 49) for performing a second comparison operation comprising

comparing the stored data element read out from said first comparison operation with a third data element stored at said other end of the next adjacent stack in said order of stacks to determine if said read out stored data element has a third particular relationship in the order of numerical significance to said third stored data element,

reading out said first read out stored data element if said third particular relationship is determined, and

reading out said third stored data element if said third particular relationship is not determined,

means for repeating said second comparison operation with the remaining stacks in said order of stacks, and

readout means for reading out the final read out stored data element into said output data stream.

7. Apparatus as claimed in Claim 6 characterised in that

in said storing operation said first particular relationship is that said stored data element is higher in numerical order than said supplied data element, and

in said reading out operation,

in first comparison operation, said second particular relationship is that said second stored data element is higher in numerical order than said first stored data element, and

in said second comparison operation, said third particular relationship is that said third stored data element is higher in numerical order than said read out data element.

8. Apparatus as claimed in Claim 6 or Claim 7 comprising means for performing an overflow operation when the step in said storing operation of comparing a supplied data element with a data element stored in each stack does not determine a stored data element having the first particular relationship with the supplied data element, characterised in that said means for performing said overflow operation comprises

means for transferring all the data elements stored in said stacks to the string of data elements,

means for storing said supplied data element at said one end of the first stack in said order of stacks, and

means for subsequently performing said storing operation and said reading out operation.

9. Apparatus as claimed in any one Claims 6, 7 or 8 characterised in that said storing means comprises means (47, 49) for performing the preliminary step of comparing each supplied data element with the data element stored at the other end of each stack in succession to determine if any one of said stored data elements has a fourth particular numerical relationship with said supplied data element,

means for supplying said stored data element having said fourth particular relationship, if it is determined, to said array of stacks for performance of the remaining steps of said storing operation, and

means for supplying said supplied data element to said array of stacks for the remaining steps of said storing operation, if a stored data element having said fourth particular relationship is not determined.

10. Apparatus as claimed in Claim 9 characterised in that, in said preliminary step, said fourth particular relationship is that said stored data element is lower in numerical order than said supplied data element.

**Patentansprüche**

1. Eine Methode zum Sortieren einer Kette von Datenelemen ten, die eine numerische Wertigkeit haben oder haben können, in der Ordnung ihrer numerischen Wertigkeit, wobei die Methode folgende Schritte umfaßt:

In einer Anordnung von Stapelspeichern (11, 13, 15, ... S; 40), Definieren einer Ordnung von Stapelspeichern, wobei jeder Stapelspeicher ein First-in-first-out-Stapelspeicher ist, und eine Vielzahl von Speicherpositionen enthält (11b, 13b, 15b, ... 31; 43, 40, 47),

Ausführen einer Speicheroperation, in der die genannten Datenelemente in den genannten Stapelspeichern gespeichert werden, wobei die Datenelemente in jedem Stapelspeicher in der Ordnung ihrer numerischen Wertigkeit in eine Sequenz sortiert werden, und

konkurrierendes Durchführen einer Auslese-Operation, in der die genannten Datenelemente aus den genannten Stapelspeichern ausgelesen werden und einen Ausgangsstrom bilden, in dem die Datenelemente in der Ordnung ihrer numerischen Wertigkeit einsortiert sind,

dadurch gekennzeichnet, daß

die genannte Speicheroperation folgende Schritte umfaßt:

jedes Datenelements nacheinander der genannten Anordnung von Stapelspeichern zuführen,

Vergleichen jedes zugeführten Datenelements mit dem Element, das an einem Ende der Sequenz von Datenelementen in jedem Stapelspeicher gespeichert wurde, um festzustellen, welches dieser gespeicherten Datenelemente, in der Ordnung der numerischen Wertigkeit, eine erste bestimmte Beziehung zu dem zugeführten Datenelement hat,

Verschieben des genannten festgestellten gespeicherten Datenelements in die benachbarte Speicherposition in seinem zugehörigen Stapelspeicher, und

Speichern des genannten zugeführten Datenelements in der ursprünglich von dem genannten verschobenen Datenelement besetzten Speicherposition,

sowie dadurch, daß die genannte Auslese-Operation folgende Schritte umfaßt:

Ausführen einer ersten Vergleichsoperation, die folgendes umfaßt:

Vergleichen eines ersten Datenelements, das an dem anderen Ende gegenüber dem genannten einen Ende des ersten Stapelspeichers in der genannten Ordnung von Stapelspeichern gespeichert ist, mit einem zweiten Datenelement, das an dem genannten anderen Ende des benachbarten Stapelspeichers in der genannten Ordnung von Stapelspeichern gespeichert ist, um festzustellen, ob das genannte erste gespeicherte Datenelement, in der Ordnung der numerischen Wertigkeit, eine zweite bestimmte Beziehung zu dem genannten zweiten gespeicherten Datenelement hat,

Auslesen des genannten ersten gespeicherten Datenelements, wenn die genannte zweite bestimmte Beziehung festgestellt wird, und

Auslesen des genannten zweiten gespeicherten Datenelements, wenn die genannte zweite bestimmte Beziehung nicht festgestellt wird,

Ausführen einer zweiten Vergleichsoperation, folgendes umfassend:

Vergleichen des gespeicherten Datenelements, das aus der genannten ersten Vergleichsoperation ausgelesen wurde, mit einem dritten Datenelement, das am genannten anderen Ende des genannten benachbarten Stapelspeichers in der genannten Ordnung von Stapelspeichern gespeichert ist, um festzustellen, ob das genannte ausgelesene gespeicherte Datenelement, in der Ordnung der numerischen Wertigkeit, eine dritte bestimmte Beziehung zu dem genannten dritten gespeicherten Datenelement hat,

Auslesen des genannten zuerst ausgelesenen gespeicherten Datenelements, wenn die genannte dritte bestimmte Beziehung festgestellt wird, und

Auslesen des genannten dritten gespeicherten Datenelements, wenn die genannte dritte bestimmte Beziehung nicht festgestellt wird,

Wiederholen der genannten zweiten Vergleichsoperation mit den verbleibenden Stapelspeichern in der genannten Ordnung von Stapelspeichern und

Auslesen des zuletzt ausgelesenen gespeicherten Datenelements in den genannten Ausgangsdatenstrom.

2. Eine Methode nach Anspruch 1, dadurch gekennzeichnet, daß

in der genannten Speicheroperation die genannte erste bestimmte Beziehung darin besteht, daß das genannte gespeicherte Datenelement in der numerischen Ordnung höher liegt, als das genannte zugeführte Datenelement, und

in der genannten Ausleseoperation,

in der ersten Vergleichsoperation die genannte zweite bestimmte Beziehung darin besteht, daß das genannte zweite gespeicherte Datenelement in der numerischen Ordnung höher liegt, als das genannte erste gespeicherte Datenelement, und in der genannten zweiten Vergleichsoperation die genannte dritte bestimmte Beziehung darin besteht, daß das genannte dritte gespeicherte Datenelement in der numerischen Ordnung höher liegt, als das genannte ausgelesene Datenelement.

3. Eine Methode nach Anspruch 1 oder Anspruch 2, die Durchführung einer Überlaufoperation umfassend, wenn in der genannten Speicheroperation der Schritt des Vergleichens eines zugeführten Datenelements mit einem in jedem Stapelspeicher gespeicherten Datenelement kein gespeichertes Datenelement feststellt, das zu dem zugeführten Datenelement die erste bestimmte Beziehung hat,

dadurch gekennzeichnet, daß die genannte Überlaufoperation folgendes umfaßt:

Übertragen aller in den genannten Stapelspeichern gespeicherten Datenelemente zu der Datenelemente-Kette,

Speichern des genannten zugeführten Datenelements an dem genannten einen Ende des ersten Stapelspeichers in der genannten Ordnung von Stapelspeichern, und

anschließend Durchführung der genannten Speicheroperation und der genannten Ausleseoperation.

4. Eine Methode nach jedem der vorangehenden Ansprüche, dadurch gekennzeichnet, daß die genannte Speicheroperation die Ausführung des vorläufigen Schritts des fortlaufenden Vergleichens jedes zugeführten Datenelements mit dem am anderen Ende jedes Stapelspeichers gespeicherten Datenelement umfaßt, um festzustellen, ob eins der genannten gespeicherten Datenelemente eine vierte bestimmte numerische Beziehung zu dem genannten zugeführten Datenelement hat,

Zuführen des genannten gespeicherten Datenelements, das, wenn dies festgestellt wird, die genannte vierte bestimmte Beziehung hat, zu der genannten Anordnung von Stapelspeichern, zur Ausführung der übrigen Schritte der genannten Speicheroperation, und

Zuführen des genannten zugeführten Datenelements zu der genannten Anordnung von Stapelspeichern zur Ausführung der übrigen Schritte der genannten Speicheroperation, wenn kein gespeichertes Datenelement, das die genannte vierte bestimmte Beziehung hat, ermittelt wird.

5. Eine Methode nach Anspruch 4, dadurch gekennzeichnet, daß, in dem genannten vorläufigen Schritt, die genannte vierte bestimmte Beziehung darin besteht, daß das genannte gespeicherte Datenelement in der numerischen Ordnung niedriger ist, als das genannte zugeführte Datenelement.

6. Einrichtung (10) zum Sortieren einer Kette von Daten elementen, die numerische Wertigkeit haben oder haben können, in der Ordnung ihrer numerischen Wertigkeit, wobei die Einrichtung folgendes aufweist:

eine Anordnung von Stapelspeichern (11, 13, 15, ... S; 40) in einer Ordnung von Stapelspeichern, wobei jeder Stapelspeicher ein First-in-first-out-Stapelspeicher ist und eine Vielzahl von Speicherpositionen (11b, 13b, 15b, ... 31; 43, 40, 47) enthält,

Speichermittel (11a, 13a, 15a, ... 34; 41) zum Ausführen einer Speicheroperation, in der die genannten Datenelemente in den genannten Stapelspeichern gespeichert werden, wobei die Datenelemente in jedem Stapelspeicher in eine Sequenz in der Ordnung ihrer numerischen Wertigkeit einsortiert werden, und

konkurrierende Auslesemittel (11d, 13d, 15d, ...20, 30; 47) zur Durchführung einer Ausleseoperation, bei der die genannten Datenelemente aus den genannten Stapelspeichern ausgelesen werden, um einen Ausgangsstrom zu bilden, in dem die genannten Datenelemente in der Ordnung ihrer numerischen Wertigkeit sortiert sind,

dadurch gekennzeichnet, daß

das genannte Speichermittel folgendes umfaßt:

Mittel (RA), um jedes Datenelement der Reihe nach der genannten Anordnung von Stapelspeichern zuzuführen,

Vergleichsmittel (11a, 13a, 15a, ...34; 41) zum Vergleichen jedes zugeführten Datenelements mit dem an einem Ende der Sequenz von Datenelementen in jedem Stapelspeicher in der genannten Ordnung von Stapelspeichern gespeicherten Datenelement, um festzustellen, welches dieser gespeicherten Datenelemente, in der Ordnung der numerischen Wertigkeit, eine erste bestimmte Beziehung zu dem zugeführten Datenelement hat,

Mittel (11b, 13b, 15b, ...31; 41), um das genannte festgestellte gespeicherte Datenelement in die benachbarte Speicherposition in seinem zugehörigen Stapelspeicher zu bewegen, und

Mittel (11b, 13b, 15b, ...31; 46), um das genannte zugeführte Datenelement in der Speicherposition zu speichern, die ursprünglich von dem genannten bewegten Datenelement belegt wurde,

und dadurch, daß das genannte Auslesemittel folgendes umfaßt:

erste Vergleichsmittel (13d; 49) zur Durchführung einer ersten Vergleichsoperation, die folgendes umfaßt:

Vergleichen eines ersten Datenelements, das an dem anderen Ende gegenüber dem genannten einen Ende des ersten Stapelspeichers in der genannten Ordnung von Stapelspeichern gespeichert ist, mit einem zweiten Datenelement, das an dem genannten anderen Ende des benachbarten Stapelspeichers gespeichert ist, um festzustellen, ob das genannte erste gespeicherte Datenelement, in der Ordnung der numerischen Wertigkeit, eine zweite bestimmte Beziehung zu dem genannten zweiten gespeicherten Datenelement hat,

Auslesemittel zum Auslesen des genannten ersten gespeicherten Datenelements, wenn die genannte zweite bestimmte Beziehung festgestellt wird, und

Auslesemittel zum Auslesen des genannten zweiten gespeicherten Datenelements, wenn die genannte zweite bestimmte Beziehung nicht festgestellt wird,

zweite Vergleichsmittel (15d, ... 30; 49) zur Ausführung einer zweiten Vergleichsoperation, folgendes umfassend:

Vergleichen des gespeicherten Datenelements, das aus der genannten ersten Vergleichsoperation ausgelesen wurde, mit einem dritten Datenelement, das am genannten anderen Ende des nächsten benachbarten Stapelspeichers in der genannten Ordnung von Stapelspeichern gespeichert ist, um festzustellen, ob das genannte ausgelesene gespeicherte Datenelement, in der Ordnung der numerischen Wertigkeit, eine dritte bestimmte Beziehung zu dem genannten dritten gespeicherten Datenelement hat,

Auslesen des genannten ersten ausgelesenen gespeicherten Datenelements, wenn die genannte dritte bestimmte Beziehung festgestellt wird, und

Auslesen des genannten dritten gespeicherten Datenelements, wenn die genannte dritte bestimmte Beziehung nicht festgestellt wird,

Mittel zum Wiederholen der genannten zweiten Vergleichsoperation mit den übrigen Stapelspeichern in der genannten Anordnung von Stapelspeichern und

Auslesemittel zum Auslesen des endgültigen ausgelesenen gespeicherten Datenelements in den genannten Ausgangsdatenstrom.

7. Einrichtung nach Anspruch 6, dadurch gekennzeichnet, daß

in der genannten Speicheroperation die genannte erste bestimmte Beziehung darin besteht, daß das genannte gespeicherte Datenelement in der numerischen Ordnung höher ist, als das genannte zugeführte Datenelement, und

in der genannten Ausleseoperation,

in der ersten Vergleichsoperation, die genannte zweite bestimmte Beziehung darin besteht, daß das genannte zweite gespeicherte Datenelement in der numerischen Ordnung höher ist, als das genannte erste gespeicherte Datenelement, und in der genannten zweiten Vergleichsoperation die genannte dritte bestimmte Beziehung darin besteht, daß das genannte dritte gespeicherte Datenelement in der numerischen Ordnung höher ist, als das genannte ausgelesene Datenelement.

8. Einrichtung nach Anspruch 6 oder Anspruch 7, Mittel umfassend für die Durchführung einer Überlaufoperation, wenn in der genannten Speicheroperation beim Vergleichen eines zugeführten Datenelements mit einem in jedem Stapelspeicher gespeicherten Datenelement kein gespeichertes Datenelement ermittelt wird, das zu dem zugeführten Datenelement die erste bestimmte Beziehung hat, dadurch gekennzeichnet, daß das genannte Mittel zur Ausführung der genannten Überlaufoperation folgendes aufweist:
Mittel zur Übertragung aller in den genannten Stapelspeichern gespeicherten Datenelemente zu der Kette von Datenelementen,
Mittel zum Speichern des genannten zugeführten Datenelements an dem genannten einen Ende des ersten Stapelspeichers in der genannten Ordnung von Stapelspeichern, und
Mittel für die nachfolgende Ausführung der genannten Speicheroperation und der genannten Ausleseoperation.

9. Einrichtung nach jedem der Ansprüche 6, 7 oder 8, da durch gekennzeichnet, daß das genannte Speichermittel Mittel (47, 49) für die Ausführung des vorläufigen Schritts des fortlaufenden Vergleichens jedes zugeführten Datenelements mit dem am anderen Ende jedes Stapelspeichers gespeicherten Datenelement umfaßt, um festzustellen, ob eines der genannten gespeicherten Datenelemente eine vierte bestimmte numerische Beziehung zu dem genannten zugeführten Datenelement hat,
Mittel, um das genannte gespeicherte Datenelement mit der genannten vierten bestimmten Beziehung, wenn eine solche festgestellt wurde, an die genannte Anordnung von Stapelspeichern zu liefern, zur Durchführung der übrigen Schritte der genannten Speicheroperation, und
Mittel für die Lieferung des genannten zugeführten Datenelements an die genannte Anordnung von Stapelspeichern, für die übrigen Schritte der genannten Speicheroperation, wenn ein gespeichertes Datenelement mit der genannten vierten bestimmten Beziehung nicht festgestellt wurde.

10. Einrichtung nach Anspruch 9, dadurch gekennzeichnet, daß in dem genannten vorläufigen Schritt die genannte vierte bestimmte Beziehung darin besteht, daß das genannte gespeicherte Datenelement in der numerischen Ordnung niedriger ist, als das genannte zugeführte Datenelement.

## Revendications

1. Procédé pour trier une chaîne d'éléments d'information, lesquels comportent ou peuvent être considérés avoir une signification numérique, dans l'ordre de leur signification numérique, le procédé comprenant les étapes consistant à définir dans une zone de piles (11, 13, 15, ... S, 40), un ordre de piles, chaque pile étant du type premier entré, premier sorti et comportant une pluralité d'emplacements mémoire (11b, 13b, 15b, ... 31, 43, 40, 47), effectuer une opération de mémorisation, dans laquelle lesdits éléments d'information sont mémorisés dans lesdites piles avec les éléments d'information dans chaque pile étant triés en une séquence dans l'ordre de leur signification numérique, et effectuer simultanément une opération d'extraction dans laquelle lesdits éléments d'information sont extraits desdites piles afin de former un train de sortie dans lequel lesdits éléments d'information sont triés dans l'ordre de leur signification numérique, caractérisé en ce que ladite opération de mémorisation comprend les étapes consistant à délivrer chaque élément d'information à son tour audit réseau de piles, comparer chaque élément d'information délivré à l'élément mémorisé à une extrémité de la séquence des éléments d'information dans chaque pile afin de déterminer quel élément d'information mémorisé a une première relation particulière dans l'ordre de la signification numérique, par rapport à l'élément d'information délivré, placer ledit élément d'information mémorisé déterminé dans la position mémoire adjacente dans sa pile associée, et mémoriser ledit élément d'information délivré dans l'emplacement mémoire occupé à l'origine par ledit élément d'information déplacé, et en ce que ladite opération d'extraction comprend les étapes consistant à effectuer une première opération de comparaison comprenant les étapes consistant à comparer un premier élément d'information mémorisé à l'autre extrémité opposée à ladite première extrémité de la première pile, dans ledit ordre des piles à un second élément d'information mémorisé à ladite autre extrémité de la pile contiguë dans ledit ordre des piles afin de déterminer si ledit premier élément d'information mémorisé présente une relation particulière dans l'ordre de la signification numérique par rapport audit second élément d'information mémorisé, extraire ledit premier élément d'information mémorisé si ladite seconde relation particulière est déterminée, et extraire ledit second élément d'information mémorisé si ladite seconde relation particulière n'est pas déterminée, effectuer une seconde opération de comparaison comprenant les étapes consistant à comparer l'élément d'information mémorisé extrait de ladite première opération de comparaison à un troisième élément d'information mémorisé à ladite autre extrémité de la pile contiguë suivante dans ledit ordre des piles, afin de déterminer si ledit élément d'information mémorisé extrait présente une troisième relation particulière dans l'ordre de la signification numérique, par rapport audit troisième élément d'information mémorisé, extraire ledit premier élément d'information mémorisé extrait si ladite relation troisième particulière est déterminée, et extraire ledit troisième élément d'information mémorisé si ladite troisième relation particulière n'est pas déterminée, répéter ladite seconde opération de comparaison avec le restant des piles et dans ledit ordre des piles, et extraire l'élément d'information mémorisé extrait final dans ledit train de données de sortie.

2. Procédé selon la revendication 1, caractérisé en ce que
dans ladite opération de mémorisation, ladite première relation particulière est que ledit élément d'information mémorisé soit plus élevé dans l'ordre numérique que ledit élément d'information délivré, et
dans ladite opération d'extraction,
dans la première opération de comparaison, ladite seconde relation particulière est que ledit second élément d'information mémorisé soit plus élevé dans l'ordre numérique que ledit premier élément d'information mémorisé, et
dans ladite seconde opération de comparaison, ladite troisième relation particulière est que ledit troisième élément d'information mémorisé soit plus élevé dans l'ordre numérique que ledit élément d'information extrait.

3. Procédé selon la revendication 1 ou la revendication 2, comprenant l'étape consistant à effectuer une opération de débordement lorsque l'étape dans ladite opération de mémorisation consistant à comparer un élément d'information délivré à un élément d'information mémorisé dans chaque pile ne détermine pas qu'un élément d'information mémorisé présente la première relation particulière par rapport à l'élément d'information délivré, caractérisé en ce que l'opération de débordement comprend les étapes consistant à transférer tous les éléments d'information mémorisés dans lesdites piles à la chaîne des éléments d'information, mémoriser ledit élément d'information délivré à ladite première extrémité de la première pile dans ledit ordre des piles, et effectuer ultérieurement ladite opération de mémorisation et ladite opération d'extraction.

4. Procédé selon l'une quelconque des revendications précédentes, caractérisé en ce que ladite opération de mémorisation comprend l'étape consistant à effectuer l'étape préliminaire consistant à comparer chaque élément d'information délivré à l'élément d'information mémorisé à l'autre extrémité de chaque pile dans l'ordre afin de déterminer si l'un quelconque des éléments parmi les éléments d'information mémorisés présente une quatrième relation numérique particulière par rapport audit élément d'information délivré, délivrer ledit élément d'information mémorisé présentant ladite quatrième relation particulière, si cela est déterminé, audit réseau de piles pour exécution des étapes restantes de ladite opération de mémorisation, et délivrer ledit élément d'information appliqué audit réseau de piles pour les étapes restantes de ladite opération de mémorisation, si un élément d'information mémorisé ayant ladite quatrième relation particulière n'est pas déterminé.

5. Procédé selon la revendication 4, caractérisé en ce que, dans ladite étape préliminaire, ladite quatrième relation particulière est que ledit élément d'information mémorisé soit moins élevé en ordre numérique que ledit élément d'information appliqué.

6. Dispositif (10) pour trier une chaîne d'éléments d'information, qui ont ou peuvent avoir une signification numérique dans l'ordre de leur signification numérique, le dispositif comprenant
un réseau de piles (11, 13, 15, ... S, 40) dans un ordre des piles, chaque pile étant du type premier entré, premier sorti et comportant une pluralité d'emplacements mémoire (11b, 13b, 15b, ... 31, 43, 40, 47),
un moyen de mémorisation (11a, 13a, 15a, ... 34, 41) pour effectuer une opération de mémorisation dans laquelle lesdits éléments d'information sont mémorisés dans lesdites piles avec les éléments d'information dans chaque pile étant triés en une séquence dans l'ordre de leur signification numérique, et

un moyen d'extraction simultanée (11d, 13d, 15d, ... 20, 30, 47) pour effectuer une opération d'extraction dans laquelle lesdits éléments d'information sont extraits desdites piles afin de former un train de sortie dans lequel lesdits éléments d'information sont triés dans l'ordre de leur signification numérique,

caractérisé en ce que

ledit moyen de mémorisation comprend,

un moyen (RA) pour délivrer chaque élément d'information, à son tour, audit réseau de piles,

un moyen de comparaison (11a, 13a, 15a, ... 34, 41) pour comparer chaque élément d'information appliqué à l'élément d'information mémorisé à une extrémité de la séquence des éléments d'information dans chaque pile dans ledit ordre des piles afin de déterminer quel élément d'information mémorisé présente une première relation particulière dans l'ordre de la signification numérique par rapport à l'élément d'information appliqué,

un moyen (11b, 13b, 15b, ... 31, 41) pour placer ledit élément d'information mémorisé déterminé dans l'emplacement mémoire contigu dans sa pile associée, et

un moyen (11b, 13b, 15b, ... 31, 46) pour mémoriser ledit élément d'information appliqué dans la position mémoire occupée à l'origine par ledit élément d'information déplacé,

et en ce que le moyen d'extraction comprend

un premier moyen de comparaison (13d, 49) pour effectuer une première opération de comparaison comprenant

comparer un premier élément d'information mémorisé à l'autre extrémité, opposée à ladite première extrémité, de la première pile dans ledit ordre des piles avec un second élément d'information mémorisé à ladite autre extrémité de la pile contiguë dans l'ordre, afin de déterminer si ledit premier élément d'information mémorisé présente une seconde relation particulière dans l'ordre de la signification numérique par rapport audit second élément d'information mémorisé,

un moyen d'extraction pour extraire ledit premier élément d'information mémorisé si ladite seconde relation particulière est déterminée, et

un moyen d'extraction pour extraire ledit second élément d'information mémorisé si ladite seconde relation particulière n'est pas déterminée,

un second moyen de comparaison (15d, ... 30, 49) pour effectuer une seconde opération de comparaison comprenant

comparer l'élément d'information mémorisé extrait à partir de ladite première opération de comparaison à un troisième élément d'information mémorisé à ladite autre extrémité de la pile contiguë suivante dans ledit ordre des piles afin de déterminer si ledit élément d'information mémorisé extrait présente une troisième relation particulière dans l'ordre de la signification numérique par rapport audit troisième élément d'information mémorisé,

extraire ledit premier élément d'information mémorisé extrait si ladite première relation particulière est déterminée, et

extraire ledit troisième élément d'information mémorisé extrait si ladite troisième relation particulière n'est pas déterminée,

un moyen pour répéter ladite seconde opération de comparaison avec les piles restantes dans ledit ordre des piles, et

un moyen d'extraction pour extraire l'élément d'information mémorisé extrait final dans ledit train de données de sortie.

**7.** Dispositif selon la revendication 6, caractérisé en ce que

dans ladite opération de mémorisation, ladite première relation particulière est que ledit élément d'information mémorisé soit plus élevé dans l'ordre numérique que ledit élément d'information appliqué, et

dans ladite opération d'extraction,

dans la première opération de comparaison, ladite seconde relation particulière est que ledit second élément d'information mémorisé soit plus élevé dans l'ordre numérique que ledit premier élément d'information mémorisé, et

dans ladite seconde opération de comparaison, ladite troisième relation particulière est que ledit troisième élément d'information mémorisé soit plus élevé dans l'ordre numérique que ledit élément d'information extrait.

**8.** Dispositif selon la revendication 6 ou la revendication 7, comprenant un moyen pour effectuer une opération de débordement lorsque l'étape dans ladite opération de mémorisation consistant à comparer un élément d'information appliqué à un élément d'information mémorisé dans chaque pile ne détermine pas qu'un élément d'information mémorisé présente la première relation particulière avec l'élément d'information appliqué, caractérisé en ce que ledit moyen pour effectuer ladite opération de débordement comprend

un moyen pour transférer tous les éléments d'information mémorisés dans lesdites piles à la chaîne des éléments d'information,

un moyen pour mémoriser ledit élément d'information appliqué à ladite première extrémité de la première pile dans ledit ordre des piles, et

un moyen pour effectuer ultérieurement ladite opération de mémorisation et ladite opération d'extraction.

9. Dispositif selon l'une quelconque des revendications 6, 7 ou 8, caractérisé en ce que ledit moyen de mémorisation comprend un moyen (47, 49) pour effectuer l'étape préliminaire consistant à comparer chaque élément d'information appliqué à l'élément d'information mémorisé à l'autre extrémité de chaque pile dans l'ordre, afin de déterminer si l'un quelconque des éléments d'information mémorisés présente une quatrième relation numérique particulière par rapport audit élément d'information appliqué,
un moyen pour délivrer ledit élément d'information mémorisé ayant la quatrième relation particulière si elle est déterminée audit réseau des piles pour l'exécution des étapes restantes de ladite opération de mémorisation, et
un moyen pour délivrer ledit élément d'information appliqué audit réseau de piles pour les étapes restantes de ladite opération de mémorisation, si un élément d'information mémorisé ayant la quatrième relation particulière n'est pas déterminé.

10. Dispositif selon la revendication 9, caractérisé en ce que, dans ladite étape préliminaire, ladite quatrième relation particulière est que ledit élément d'information mémorisé soit moins élevé dans l'ordre numérique que ledit élément d'information appliqué.

FIG. 1

FIG 2

FIG. 3

RAS
LOCATIONS

FIG. 4

FIG. 5